(19) **Europäisches Patentamt / European Patent Office / Office européen des brevets**

(11) **EP 1 747 132 B1**

(12) **EUROPÄISCHE PATENTSCHRIFT**

| | |
|---|---|
| (45) Veröffentlichungstag und Bekanntmachung des Hinweises auf die Patenterteilung:<br>**07.11.2007 Patentblatt 2007/45** | (51) Int Cl.:<br>**B60T 13/66** *(2006.01)* **B60T 15/36** *(2006.01)* |
| (21) Anmeldenummer: **05742920.1** | (86) Internationale Anmeldenummer:<br>**PCT/EP2005/005237** |
| (22) Anmeldetag: **13.05.2005** | (87) Internationale Veröffentlichungsnummer:<br>**WO 2005/110830 (24.11.2005 Gazette 2005/47)** |

(54) **ELEKTROPNEUMATISCHE BREMSEINRICHTUNG EINES SCHIENENFAHRZEUGS MIT DURCHGÄNGIGEM REGELBEREICH**

ELECTROPNEUMATIC BRAKING DEVICE OF A RAIL VEHICLE COMPRISING A CONTINUOUS REGULATING RANGE

SYSTEME DE FREINAGE ELECTRO-PNEUMATIQUE D'UN VEHICULE FERROVIAIRE COMPRENANT UNE ZONE DE REGLAGE CONTINUE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **14.05.2004 DE 102004024462**

(43) Veröffentlichungstag der Anmeldung:
**31.01.2007 Patentblatt 2007/05**

(73) Patentinhaber: **KNORR-BREMSE Systeme für Schienenfahrzeuge GmbH 80809 München (DE)**

(72) Erfinder:
- **KNÖRNSCHILD, Thomas 81245 München (DE)**
- **SIMON, Timm 80636 München (DE)**
- **HELLER, Martin 85716 Unterschleissheim (DE)**
- **HERDEN, Marc-Oliver 81476 München (DE)**

(74) Vertreter: **Schönmann, Kurt Knorr-Bremse AG Moosacher Strasse 80 D-80809 München (DE)**

(56) Entgegenhaltungen:
| | |
|---|---|
| **DE-A1- 2 801 778** | **DE-A1- 4 309 386** |
| **GB-A- 926 885** | **US-A- 2 147 327** |
| **US-B1- 6 669 308** | |

**EP 1 747 132 B1**

**Beschreibung**

Stand der Technik

Die Erfindung geht aus von einem elektropneumatischen Bremssystem eines Schienenfahrzeugs beinhaltend eine direkt wirkende elektro-pneumatische Bremseinrichtung und eine indirekt wirkende Druckluftbremseinrichtung gemäß dem Oberbegriff des Patentanspruchs 1. Ein solches Bremssystem ist aus der US 6,669,308 B1 bekannt.

Ein gattungsgleiches elektropneumatisches Bremssystem ist beispielsweise aus der DE 38 036 39 A1 bekannt. Bei diesem Bremssystem wird ein der Achslast entsprechendes Signal in der elektronischen Steuerung dazu verwendet, einen Übertragungsfaktor zwischen der Bremszylinderanforderung und dem Bremsdruck im Bremszylinder mit einer Lastkorrektur zu versehen. Dieses Lastsignal wird in einen Druckregler eingesteuert, welcher in Abhängigkeit des elektrischen Bremsdruckanforderungssignals der direkten elektronisch gesteuerten Bremse einen Vorsteuerdruck der direkten Bremse erzeugt. Die indirekte pneumatische Bremse umfasst demgegenüber ein Steuerventil, welches in Abhängigkeit eines Hauptluftleitungsdrucks einen Vorsteuerdruck der indirekten Bremse erzeugt. Die Vorsteuerdrücke der indirekten pneumatischen und der elektronisch gesteuerten direkten Bremse werden durch ein Relaisventil oder auch zwei Relaisventile mengenverstärkt und über ein Wechselventil zusammengefasst, welches den größeren der Vorsteuerdrücke an ein Druckbegrenzungsventil mehr oder weniger zuverlässig weiterschaltet.

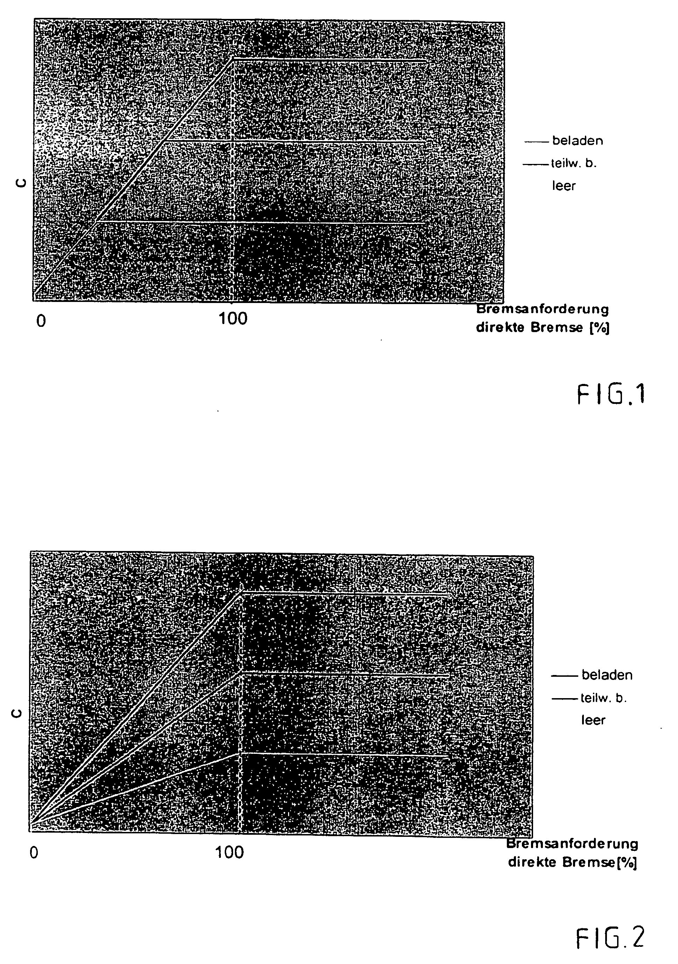

Für die indirekte pneumatische Bremse und eine Notbremseinrichtung wird das Lastsignal zur Verstellung des Druckbegrenzungsventils verwendet, welches den Bremsdruck im Bremszylinder allerdings nur bei einer Vollbremsung begrenzt. Solche Bremssysteme haben den Nachteil, dass die Betriebsbremse nicht durchgehend lastkorrigiert und der Regelbereich verkürzt ist. Dieser Sachverhalt ist in dem Diagramm von Fig.1 wiedergegeben, welches den Verlauf des von der direkten Bremseinrichtung erzeugten Bremsdrucks C über der Bremsanforderung für drei Lastzustände - leer, teilweise beladen und voll beladen - zeigt. Demnach ist der volle Bereich der Bremsanforderung von 0% bis 100 % lediglich bei voll beladenem Fahrzeug vollständig regelbar, während bei leerem Fahrzeug der Bremsdruck C nur bis etwa 30% der Bremsanforderung geregelt und für eine darüber hinaus gehende Bremsanforderung auf einen Höchstwert begrenzt wird. In analoger Weise ist auch der Regelbereich bei teilweise beladenem Fahrzeug eingeschränkt, was Nachteile hinsichtlich des Bremswegs mit sich bringt.

Der vorliegenden Erfindung liegt die Aufgabe zugrunde, ein elektropneumatisches Bremssystem der eingangs erwähnten Art derart weiter zu entwickeln, dass die oben genannten Nachteile vermieden werden.

Diese Aufgabe wird erfindungsgemäß durch die Merkmale von Patentanspruch 1 gelöst.

Vorteile der Erfindung

Die Erfindung schlägt ein elektropneumatisches Bremssystem eines Schienenfahrzeugs vor, beinhaltend eine direkt wirkende elektro-pneumatische Bremseinrichtung und eine indirekt wirkende Druckluftbremseinrichtung, mit wenigstens folgenden Bauelementen oder Baugruppen :

a) einem Druckregler, welcher in Abhängigkeit eines elektrischen Bremsdruckanforderungssignals der direkten Bremse einen Vorsteuerdruck der direkten Bremse erzeugt,

b) einem Druckbegrenzungsventil, welches den Vorsteuerdruck der direkten Bremse auf einen vorgebbaren maximalen Vorsteuerdruck der direkten Bremse begrenzt,

c) einem Steuerventil, welches in Abhängigkeit eines Hauptluftleitungsdrucks der indirekten Bremse einen Vorsteuerdruck der indirekten Bremse erzeugt,

d) einer Auswahleinrichtung, welche von dem maximalen Vorsteuerdruck der direkten Bremse und dem Vorsteuerdruck der indirekten Bremse eine dem jeweils größeren Vorsteuerdruck entsprechende Kraft auf ein abhängig von dem jeweiligen Lastzustand des Schienenfahrzeugs mittels einer Stelleinrichtung übersetzungsveränderbares Getriebe überträgt, welches ein Relaisventil betätigt, das einen der Betätigung durch das Getriebe entsprechenden Bremsdruck aussteuert.

Die mit dieser Anordnung erzielbaren Vorteile bestehen insbesondere darin, dass zum einen die direkte Bremseinrichtung durchgehend lastkorrigiert ist und sich der Regelbereich auf die gesamte Bremsanforderung von 0% bis 100% erstreckt, wie insbesondere aus dem Diagramm gemäß Fig.2 hervorgeht, welches den Verlauf des von der direkten Bremseinrichtung erzeugten Bremsdrucks C über der Bremsanforderung für drei Lastzustände - leer, teilweise beladen und voll beladen - zeigt. Demnach ist der volle Bereich der Bremsanforderung von 0% bis 100 % in allen Lastzuständen vollständig regelbar, wodurch in allen Lastzuständen kurze Bremswege erzielbar sind. Eine Druckbegrenzung findet erst dann statt, wenn die Bremsanforderung von 100% erreicht ist.

Durch die in den Unteransprüchen aufgeführten Maßnahmen sind vorteilhafte Weiterbildungen und Verbesserungen der in Patentanspruch 1 angegebenen Erfindung möglich.

Besonders bevorzugt sind der Druckregler und das Druckbegrenzungsventil, das Relaisventil, die Auswahleinrichtung und das Getriebe sowie die Stelleinrichtung jeweils in eigenen, miteinander verblockten Gehäusen untergebracht. Hieraus resultiert eine besonders kompakte Bauweise, außerdem sind die einzelnen Funktionsblöcke, Druckregler und Druckbegrenzungsventil, Relaisventil, Auswahleinrichtung und Getriebe sowie die Stelleinrichtung in ihrem jeweiligen Gehäuse vormontierbar.

Gemäß einer weiteren Maßnahme wird die Auswahleinrichtung beispielsweise durch eine Kolbenmembrananordnung gebildet, mit einer ersten, mit einer ersten Kolbenstange axialfest verbundenen Kolbenmembran und einer zweiten, auf die erste Kolbenstange lediglich in einer Richtung kraftübertragenden Kolbenmembran, wobei zwischen der ersten Kolbenmembran und der zweiten Kolbenmembran eine unter dem .Vorsteuerdruck der indirekten Bremse stehende erste Druckkammer und zwischen der zweiten Kolbenmembran und einer Gehäusewand eine unter dem maximalen Vorsteuerdruck der direkten Bremse stehende Druckkammer ausgebildet ist. Diese Anordnung gewährleistet gegenüber dem Wechselventil des Stands der Technik, bei welchem sich undefinierte Schaltstellungen nicht ausschließen lassen, eine wesentlich höhere Zuverlässigkeit.

Das Getriebe wird vorzugsweise durch ein Hebelgestänge gebildet, mit der ersten Kolbenstange, einer zweiten, das Relaisventil betätigenden Kolbenstange sowie mit einem Kipphebel, wobei die erste Kolbenstange an einem Ende des Kipphebels und die zweite Kolbenstange an dessen anderem Ende angelenkt und die Lage einer zwischen den Anlenkpunkten angeordneten Abstützung des Kipphebels abhängig von dem jeweiligen Lastzustand des Schienenfahrzeugs durch die Stelleinrichtung einstellbar ist. Insbesondere ist die Abstützung des Kipphebels mittels eines durch einen Lastdruck belasteten Kolben der Stelleinrichtung verstellbar.

Das Relaisventil besteht aus einem Doppelsitzventil mit einem einen Druckluftvorrat mit wenigstens einem Bremszylinder verbindenden Einlassventil und mit einem den wenigstens einen Bremszylinder mit einer Entlüftung verbindenden Auslassventil.

Eine besonders einfache Konstruktion ergibt sich, wenn ein Ventilschließkörper des Auslassventils an dem vom Kipphebel abgewandten Ende der zweiten Kolbenstange ausgebildet ist und Letztere mit einem Kolben oder einer Kolbenmembran axialfest verbunden ist, welche durch den Bremsdruck in einer das Auslassventil öffnenden Richtung belastet ist.

Die Funktion des Bremssystems wird durch die nachfolgende Beschreibung eines Ausführungsbeispiels der Erfindung deutlich.

Zeichnungen

Nachstehend ist ein Ausführungsbeispiel der Erfindung in der Zeichnung dargestellt und in der nachfolgenden Beschreibung näher erläutert. In der Zeichnung zeigt

Fig.1    ein Diagramm über den Verlauf des von einer elektropneumatischen Bremse des Stands der Technik erzeugten Bremsdrucks C in Abhängigkeit von der Bremsanforderung für drei Lastzustände;

Fig.2    ein Diagramm über den Verlauf des von einer elektropneumatischen Bremse gemäß der Erfindung erzeugten Bremsdrucks C in Abhängigkeit von der Bremsanforderung für drei Lastzustände;

Fig.3    ein Pneumatikschema einer elektropneumatischen Bremseinrichtung gemäß der Erfindung in einer bevorzugten Ausführungsform;

Fig.4    eine Querschnittsdarstellung eines Einheitsdruckumsetzers gemäß einer bevorzugten Ausführungsform der Erfindung.

Beschreibung des Ausführungsbeispiels

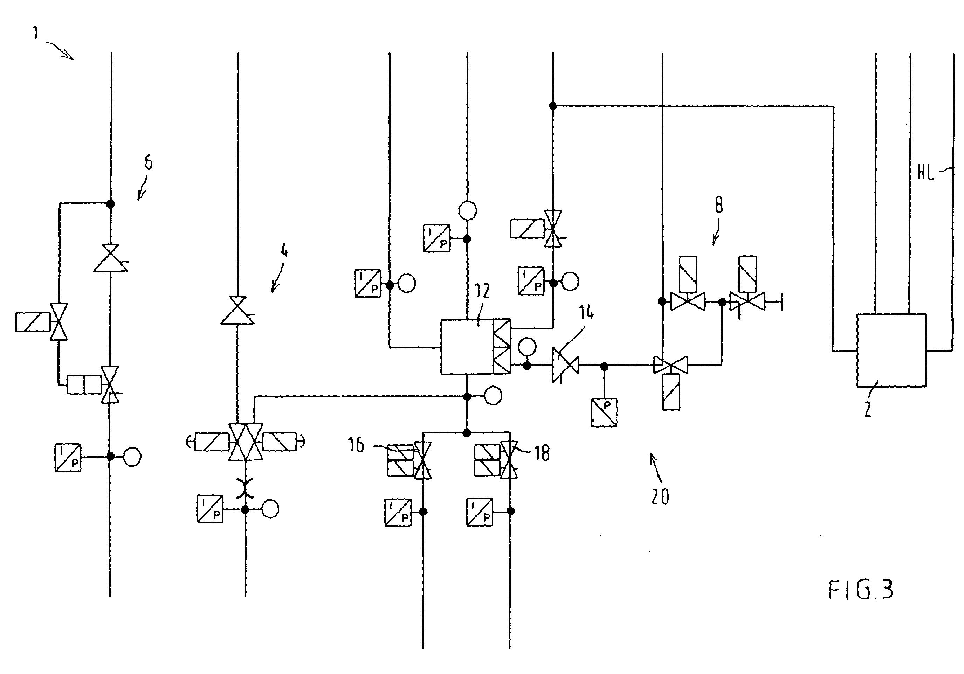

In Fig.3 ist ein Pneumatikschema eines Teils 1 einer bevorzugten Ausführungsform eines elektropneumatischen Bremssystems eines Schienenfahrzeugs gezeigt, beinhaltend eine direkt wirkende elektro-pneumatische, mikroprozessorgesteuerte Bremseinrichtung und eine indirekt wirkende Druckluftbremseinrichtung. Dieser rein pneumatische Anteil besteht in Form einer lastkorrigierten Kopplung über ein Steuerventil 2 an eine indirekt auslösende Hauptluftleitung HL.

Das Schienenfahrzeug hat mehrere Drehgestelle, wobei jedes Drehgestell durch ein Kompaktsteuermodul CCM (Compact Control Module) separat gesteuert wird, so dass für jedes Drehgestell ein individueller Bremszylinderdruck für einen oder mehrere Bremszylinder gebildet werden kann. Pro Drehgestell ist folglich ein Kompaktsteuermodul CCM vorgesehen, welches folgende Funktionen beinhaltet:

- elektronische Verarbeitung der Bremssignale

- Erzeugung des Bremszylinderdrucks für die direkte Bremseinrichtung

- Lastkorrektur

- Gleitschutzsteuerung

- Überwachung der Parkbremsansteuerung

- Magnetschienenbremsansteuerung

- Erzeugung des Vorsteuerdruckes für die indirekte Bremseinrichtung

In jedem Kompaktsteuermodul CCM ist ein in Fig.3 nicht gezeigtes elektronisches Bremssteuergerät CU (Control Unit) integriert. Übergeordnet erfolgt die Steuerung der Bremsausrüstung durch ein Bremsmanagement, welches alle Bremsfunktionen des Fahrzeugs ausführt, überwacht und diagnostiziert. Das Bremsmanagement steuert die folgenden Bremssysteme:

- elektro-dynamische Bremse (mit höchster Priorität)

- elektro-pneumatische Bremse sowie

- Federspeicherbremse

- Magnetschienenbremse.

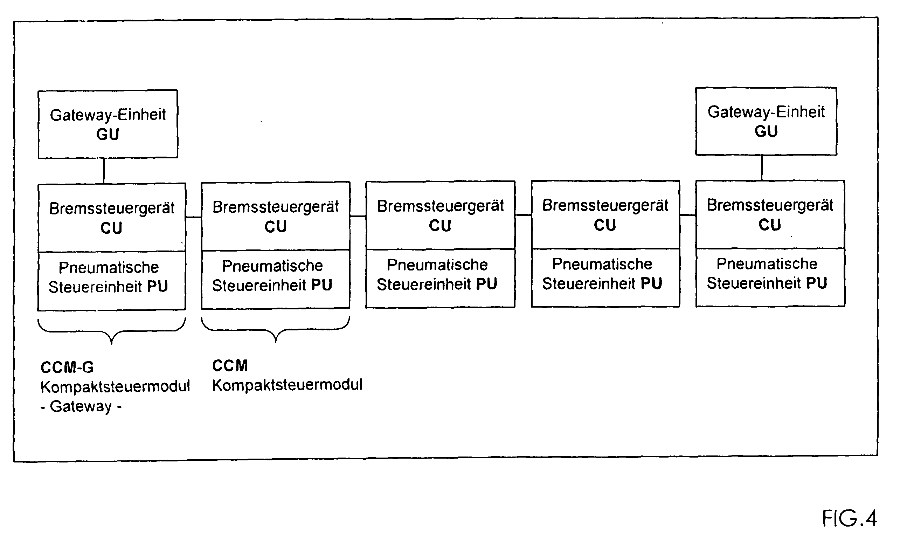

Das Bremsmanagement erfolgt übergeordnet in einer Gateway-Einheit GU, welche zusätzlich zur Koordination der Bremsfunktion auch das Interface zur Zugleittechnik beinhaltet. Innerhalb eines Zugteiles sind alle Kompaktsteuermodule CCM mit der Gateway-Einheit GU über einen Bremsenbus CAN verbunden. Wie viele Kompaktsteuermodule CCM somit verbunden sind bzw. wie lang ein solches Segment ist, hängt von der Konfiguration des Zuges ab. Bevorzugt wird eines 2 - 3 - 2 Segmentierung verwendet, wie aus Fig.4 hervorgeht.

Das vorliegende Bremssystem ermöglicht ein sog. Drei-Ebenen-BremsManagement, mit einem "Local Brake Master" in jedem Kompaktsteuermodul CCM, einem "Segment Brake Master" pro Segment und unter diesen, welche z.B. über einen Multi Vehicle Bus (MVB) miteinander verbunden sind, einem "Train Brake Master".

Das Bremsmanagement hat die Aufgabe, sämtliche zur Verzögerung des Fahrzeuges nötigen Systeme zu steuern und zu überwachen. Dies sind im einzelnen die elektrodynamischen Bremsen, welche an den Triebradsätzen wirksam sind und zur Betriebsbremsung vorrangig eingesetzt werden, die direkten pneumatischen Bremsen an den Laufachsen, welche bei Betriebsbremsungen vorrangig zum Ergänzen der benötigten Bremskraft verwendet werden, die pneumatischen Bremsen an den angetriebenen Radsätzen und die Parkbremsen und Magnetschienenbremsen. Die Steuerventilanordnung 4 der hier nicht interessierenden Parkbremse und die Steuerventilanordnung 6 der hier nicht interessierenden Magnetschienenbremse sind in Fig.3 der Vollständigkeit halber dargestellt.

Die indirekte Bremseinrichtung wird nicht vom Bremsmanagement gesteuert, sondern lediglich überwacht. Sie wird bei Normalbetrieb nur zur Schnellbremsung eingesetzt, welche rein pneumatisch ausgeführt wird (Hauptluftleitung). Bei Aktivierung der Schnellbremsschleife hat das Bremsmanagement nur eine überwachende Funktion.

Im Falle einer Notbremsung über die elektro-pneumatische Sicherheitsschleife bremst das jeweilige Bremssteuergerät CU redundant hinzu - auch dies ist keine Funktion des Bremsmanagements, sondern der lokalen Steuereinheit.

Das Bremsmanagement pro festgekuppelter Einheit (6- bzw. 4-Teiler) wird von einem Bremsrechner innerhalb einer Gateway-Einheit GU Moduls übernommen, kann jedoch bei dessen Ausfall von einem zweiten dafür ausgelegten übernommen werden (Masterumschaltung).

Wenn mehrere Einheiten (maximal zwei weitere Einheiten) zu einem Zugverband zusammen- gekuppelt werden, übernimmt ein Steuergerät in der führenden Einheit übergeordnete Bremsmanagement-Aufgaben für den Zugverband und koordiniert die Kommunikation zwischen Bremse und Zugsteuerung/Fahrer. In den jeweiligen Gateway-Einheiten GU und Bremssteuergeräten CU sind beispielsweise 3 Funktionen verankert, welche je nach Bedarf und Einbauort ausgeübt werden können:

1) Bremssteuergerät CU: Lokale Steuerfunktionen wie Ansteuerung, Signalverarbeitung und Diagnose aller lokalen Geräte und Funktionen (z.B. Bremsdrucksteuerung, Gleitschutz,...), aktiviert in jedem Gerät des Triebzuges.

2) Gateway-Einheit GU: Segmentbremsmanagement wie Leitung, Koordination und Diagnose innerhalb eines CAN-Segmentes. Ein CAN-Segment bildet sich aus der Kopplung von in diesem Falle 2 bis 3 Bremssteuermodulen CCM. Eine Gateway-Einheit GU ist physikalisch einem Bremssteuergerät CU zugeordnet, kann aber auch losgelöst von den Bremssteuermodulen CCM je nach Einbausituation im 6- bzw. 4-teiligen Triebzug eingebaut werden.

3) Zugbremsmanagement: Leitung, Koordination und Diagnose im gesamten Zugverband, Schnittstelle zu den Segmentbremsmanagern und zum Zugsteuergerät/Fahrer. Nur aktiviert in einem Gerät des führenden Triebzuges.

Je nach Einsatzort, bzw. Konfiguration werden nur die benötigten Funktionen aktiviert. Beim Aufrüsten wird bestimmt, welches Steuergerät führende Funktionen übernimmt. Bei Ausfall eines Gerätes mit aktuellen Managementfunktionen werden vom jeweils anderen dafür vorgesehenen Gerät des Triebzuges diese Funktionen übernommen (Masterumschaltung). Die lokale Bremssteuerfunktion wie Ansteuerung des Bremsdrucks, Steuerung der Parkbremse, Gleitschutz, Überwachung und Diagnose von Hähnen und Druckwächtern etc. ist vorzugsweise nicht redundant ausgeführt.

Die Kommunikation innerhalb eines Triebzuges als fest gekuppelte Einheit erfolgt über den Multi Vehicle Bus (MVB). Zwischen den Triebzügen wird über die Kupplung ein WT-Bus benutzt. Hierüber kommuniziert das Zugbremsmanagement mit den Segmentbremsmanagern der geführten Triebzüge.

Das direkt wirkende elektro-pneumatische Bremssystem ist ein mikroprozessorgesteuertes, elektro-pneumatisches Druckluftbremssystem mit komfortabler, flexibler Betriebsbremse über einen ep-Druckregler 8, in dem die von der Steuerelektronik über eine Signalleitung vorgegebenen elektrischen Befehle in pneumatische Signale, insbesondere in einen Vorsteuerdruck $C_{v\,direkt}$ für ein nachgeschaltetes Relaisventil 12 umgesetzt werden. Ein dem e/p-Druckregler 8 und dem Relaisventil 12 zwischengeschaltetes Druckbegrenzungsventil 14 begrenzt den Vorsteuerdruck $C_{v\,direkt}$ der direkten Bremse auf einen vorgebbaren maximalen Vorsteuerdruck $C_{v\,direkt\,max}$ der direkten Bremse. Die Gleitschutzregelung erfolgt über jeweils ein dem Relaisventil 12 nachgeordnetes Gleitschutzventil 16, 18 pro Radsatz. Die Notbremse wird durch ein hartverdrahtetes Notbremsmagnetventil unter Umgehung des mikroprozessorgesteuerten ep-Druckreglers realisiert.

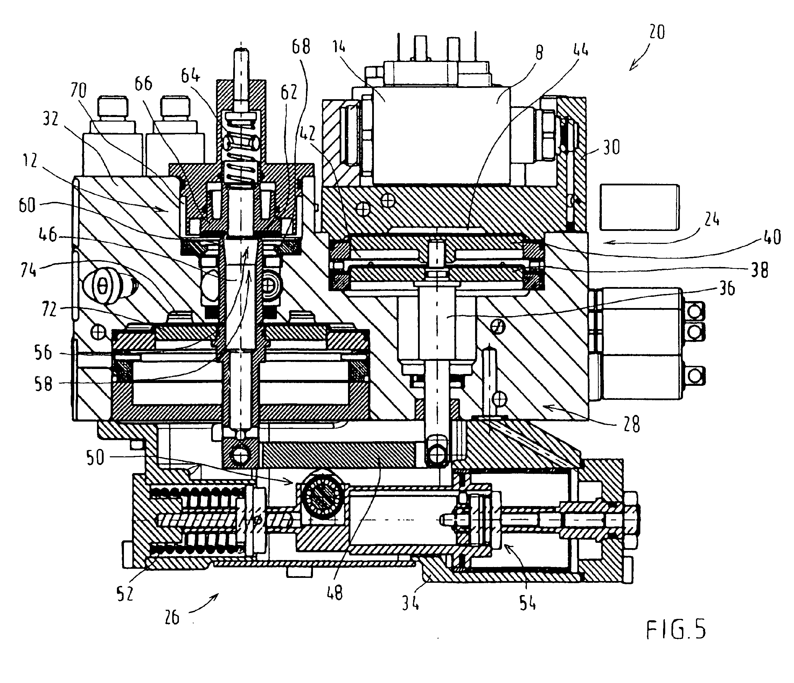

Der Befehl "Bremsen" und der Bremssollwert werden vom Zugsteuergerät an das elektronische Bremssteuergerät (Gateway-Einheit GU) übergeben. Aus diesem Sollwert errechnet der jeweilige Bremsmanager den der geforderten Bremskraft entsprechenden Bremsdruck C, welcher als elektrisches Bremsanforderungssignal an die Kompaktsteuermodule CCM weitergeleitet wird. Das elektrische Bremsanforderungssignal wird innerhalb der Bremssteuermodule mittels des ep-Druckreglers 8 in einen Vorsteuerdruck $C_{v\,direkt}$ der direkten Bremseinrichtung umgewandelt. Dieser Vorsteuerdruck $C_{v\,direkt}$ wird dann in einem in Fig.5 im Querschnitt gezeigten lastabhängigen Einheitsdruckumsetzer 20, der das Relaisventil 12 beinhaltet, leistungsverstärkt in den pneumatischen Bremsdruck C umgewandelt.

Bei der Betriebsbremsung wird neben der priorisierten elektrodynamischen Bremse ausschließlich die direkte elektropneumatische Bremseinrichtung eingesetzt. Bei kleinen Geschwindigkeiten übernimmt die Reibungsbremse ruckfrei die gesamte Bremskraft bis zum Stillstand und steuert dann selbsttätig die Festhaltestufe ein, um ein Rückrollen des Fahrzeugs zu verhindern. Die direkt wirkende elektropneumatische Bremseinrichtung wird zu folgenden Aufgaben herangezogen:

- Betriebsbremsung (lastabhängig): Ergänzung der elektrodynamischen Bremse durch die Reibungsbremse.

- Festhaltebremse (lastabhängig): Bei Fahrzeugstillstand, verhindert Rollen des Fahrzeugs,

- Haltebremse (lastabhängig): Bei kleinen Geschwindigkeiten Bremskraftübernahme in den Trieb- und Laufdrehgestellen

- Notbremse (lastabhängig): Maximale Verzögerung im Gefahrenfall, mit Gleitschutz und Lastkorrektur über Notbremsventile auf den Kompaktsteuermodulen CCM; redundant stellt auch die direkte Bremseinrichtung über den ep-Druckregler 8 den entsprechenden Bremsdruck ein; bei sehr schlechten Haftwertbedingungen kann vom Fahrer die Sandung betätigt werden.

Die indirekt wirkende Druckluftbremseinrichtung dient als Rückfallebene, vor allem bei Ausfall der direkt wirkenden Bremseinrichtung und beim Abschleppen durch UIC-Fahrzeuge, und gewährleistet folgende Funktionen:

- Kuppelbarkeit mit UIC-Fahrzeugen, auch mit Einleitungssystemen, unter Beibehaltung der Bremsfähigkeit,

- Redundante Rückfallebene der Not-/Schnellbremse,

- Redundante Bremsmöglichkeit bei Ausfall des Bremsmanagements zur Weiterfahrt und zum Räumen der Strecke (z.B. Probleme im Bordnetz).

In jedem Führerstand hat der Fahrer ein zeitabhängiges Führerbremsventil und einen Notschalttaster zum Betätigen der indirekten Bremseinrichtung zur Verfügung. Über das Führerbremsventil kann der Fahrer die Hauptluftleitung HL stufenlos entlüften und damit den Druck von 5 bar (Lösedruck) absenken. Bei Absenkung um 1,5 bar ist die höchste Bremsstufe erreicht. Eine weitere Druckabsenkung hat keinen weiteren Effekt. Bei Schnellbremse wird zur Verkürzung der Brems- und Ansprechzeiten die Hauptluftleitung HL gemäß UIC auf 0 bar entlüftet.

Der Druck in der Hauptluftleitung HL wird im Normalbetrieb mittels eines Druckminderventils und eines Führerbremsventils auf 5 bar gehalten. Der Druck in der Hauptluftleitung HL kann auch durch Betätigen der Notschalttaster im Führerstand und durch Entregen von SIFA-Ventilen mittels Öffnen der Notbremsschleife abgesenkt, und damit die Schnellbremsung ausgelöst werden.

Die Druckabsenkung in der HL-Leitung wird im Steuerventil 2 in einen Vorsteuerdruck $C_v$ umgesetzt, welcher direkt in das Kompaktsteuermodul CCM eingespeist und dann mittels des Einheitsdruckumsetzers 20 lastkorrigiert und leistungsverstärkt wird. Die Bremsung kann somit analog und lastabhängig über den kompletten Anforderungsbereich durchgeführt werden.

Durch eine Schnellbremsung können Überladungen der Arbeitskammer im Steuerventil 2 abgebaut werden (Angleichfunktion). Außerdem sind ein Rückschlagventil und ein Absperrhahn vorgesehen um bei Abschleppen mit einem Einleitungsfahrzeug die Hauptluftbehälterleitung HB befüllen zu können. In diesem Fall muss der Hahn geöffnet werden. Bei Abschleppen im stromlosen Zustand, d.h. bei nicht aktivierter Schnellbremsschleife müssen zusätzlich die Absperrhähne der SIFA-Ventile und der direkten Bremseinrichtung geschlossen werden.

Im Steuerventil 2 wird der Steuerdruck HL (Bremse lösen = 5 bar, Anlegen = Druckabsenkung um ca. 0,4 bar, Maximale Bremskraft = Druckabsenkung um 1,5 bar) in einen Vorsteuerdruck $C_{v\,indirekt}$ für das nachgeschaltete Relaisventil 12 umgesetzt. Das Steuerventil 2 ist UIC-kompatibel, das heißt, es existiert komplette Zugtauglichkeit. Daraus folgt, dass auch die UIC- Brems- und Lösezeiten und der maximale Bremszylinderdruck von 3,8 bar möglich sind.

Einige der Bremssteuermodule CCM beinhalten zusätzlich die Ansteuerung der Federspeicherbremse. Diese ist realisiert in Form eines Doppelimpulsmagnetventils mit zusätzlicher Handauslösung, welches aufgrund seiner internen Schaltung eine Überlagerung am Bremszylinder von Feder- mit Betriebskraft verhindert. Der Status der Federspeicherbremse wird intern über einen nachgeschalteten Drucksensor diagnostiziert.

Einige der Bremssteuermodule CCM beinhalten zusätzlich die Ansteuerung der Magnetschienenbremse. Diese ist realisiert in Form eines Magnetventils zur Vorsteuerung eines großquerschnittigen Kolbenventils mit vorgeschalteter Druckminderung.

In Fig.5 ist eine Querschnittsdarstellung des Einheitsdruckumsetzers 20 gezeigt, welcher wenigstens die folgenden Bauelemente oder Baugruppen beinhaltet :

- den e/p-Druckregler 8, welcher in Abhängigkeit eines elektrischen Bremsdruckanforderungssignals der direkten Bremse einen Vorsteuerdruck $C_{v\,direkt}$ der direkten Bremse erzeugt,

- das Druckbegrenzungsventil 14, welches den Vorsteuerdruck $C_{v\,direkt}$ der direkten Bremse auf einen vorgebbaren maximalen Vorsteuerdruck $C_{v\,direkt\,max}$ der direkten Bremse begrenzt,

- eine Auswahleinrichtung 24, welche von dem maximalen Vorsteuerdruck der direkten Bremse $C_{v\,direkt\,max}$ und dem Vorsteuerdruck $C_{v\,indirekt}$ der indirekten Bremse eine dem jeweils größeren Vorsteuerdruck $C_{v\,direkt\,max}$ oder $C_{v\,indirekt}$ entsprechende Kraft auf ein abhängig von dem jeweiligen Lastzustand des Schienenfahrzeugs mittels einer Stelleinrichtung 26 übersetzungsveränderbares Getriebe 28 überträgt, welches das Relaisventil 12 betätigt, das einen der Betätigung durch das Getriebe 28 entsprechenden Bremsdruck C aussteuert.

Weiterhin kann auch das Steuerventil 2, welches in Abhängigkeit eines Hauptluftleitungsdrucks $p_{HL}$ der indirekten Bremse einen Vorsteuerdruck $C_{v\,indirekt}$ der indirekten Bremse erzeugt, in den Einheitsdruckumsetzer 20 integriert sein, was beim vorliegenden Ausführungsbeispiel aber nicht der Fall ist.

Besonders bevorzugt sind der e/p-Druckregler 8 und das Druckbegrenzungsventil 14, das Relaisventil 12, die Auswahleinrichtung 24 und das Getriebe 28 sowie die Stelleinrichtung 26 jeweils in eigenen, miteinander verblockten Gehäusen 30, 32, 34 untergebracht, welche zusammen den Einheitsdruckumsetzer 20 bilden. Das den e/p-Druckregler 8 und das Druckbegrenzungsventil 14 aufnehmende Gehäuse 30 ist beispielsweise kopfseitig auf dem Gehäuse 32 angeflanscht, in welchem das Relaisventil 12, die Auswahleinrichtung 24 und das Getriebe 28 untergebracht sind. An dem Gehäuse 32 ist auch das die Stelleinrichtung 26 beherbergende Gehäuse 34 beispielsweise bodenseitig angeflanscht. Zusätzlich kann in dem Block, der den Einheitsdruckumsetzer 20 bildet auch das Notbremsmagnetventil integriert sein.

Der aus Maßstabsgründen nicht explizit gezeigte e/p-Druckregler 8 umfasst zwei Magnetventile, ein Belüftungsventil und ein Entlüftungsventil. Abhängig vom eingestellten Solldruck verbindet entweder das Entlüftungsventil einen Regleranschluss mit einer Entlüftung oder das Belüftungsventil den Regleranschluss mit einem Druckluftvorrat. Das ebenfalls nicht explizit sichtbare Druckbegrenzungsventil 14 umfasst ein einerseits durch den zu begrenzenden Vorsteuerdruck $C_{v\ direkt}$ und andererseits durch Druckfedern belastetes Ventilschließglied, welches das Druckbegrenzungsventil 14 schließt, wenn die aus dem Vorsteuerdruck $C_{v\ direkt}$ resultierende Kraft größer ist als die Federkraft. Der Aufbau und die Funktionsweise eines solchen e/p-Druckreglers 8 und eines solchen Druckbegrenzungsventils 14 sind ansonsten hinlänglich bekannt, deshalb soll hier nicht weiter darauf eingegangen werden.

Die Auswahleinrichtung 24 wird beispielsweise durch eine kombinierte KolbenMembrananordnung gebildet, mit einer ersten, mit einer ersten Kolbenstange 36 axialfest verbundenen Kolbenmembran 38 und einer zweiten, auf die erste Kolbenstange 36 lediglich in einer Richtung kraftübertragenden Kolbenmembran 40, wobei zwischen der ersten Kolbenmembran 38 und der zweiten Kolbenmembran 40 eine mit dem Vorsteuerdruck $C_{v\ indirekt}$ der indirekten Druckluftbremseinrichtung beaufschlagbare erste Druckkammer 42 und zwischen der zweiten Kolbenmembran 40 und einem Boden des kopfseitig angeflanschten Gehäuses 30 eine mit dem maximalen Vorsteuerdruck $C_{v\ direkt\ max}$ der direkten Bremseinrichtung beaufschlagbare zweite Druckkammer 44 ausgebildet ist. Die beiden Kolbenmembranen 38, 40 sind randseitig im Gehäuse 32 gehalten. Genauer ist die zweite Kolbenmembran 40 auf das Ende der ersten Kolbenstange 36 derart axial beweglich aufgesetzt, dass sie lediglich Druckkräfte auf die erste Kolbenstange 36 aufbringen kann, aber keine Zugkräfte. Vorzugsweise sind die Wirkflächen A der ersten und zweiten Kolbenmembran 38, 40 gleich groß.

Das Getriebe wird vorzugsweise durch ein Hebelgestänge 28 gebildet, beinhaltend die vorzugsweise vertikal angeordnete erste Kolbenstange 36, eine zweite, ebenfalls vertikal angeordnete und das Relaisventil 12 betätigende Kolbenstange 46 sowie einen im wesentlichen horizontalen Kipphebel 48, wobei die erste Kolbenstange 36 an einem Ende des Kipphebels 48 und die zweite Kolbenstange 46 an dessen anderem Ende angelenkt und die Lage einer zwischen den Anlenkpunkten angeordneten, der Stelleinrichtung 26 zugeordneten und als Abstützung des Kipphebels 48 dienenden Schwenkachse 50 abhängig von dem jeweiligen Lastzustand des Schienenfahrzeugs durch die Stelleinrichtung 26 einstellbar ist. Die Schwenkachse 50 des Kipphebels 48 ist dann mittels eines einerseits durch den von der jeweiligen Last abgeleiteten Lastdruck T und andererseits durch eine Druckfeder 52 belasteten Kolben 54 der Stelleinrichtung 26 beispielsweise horizontal derart verstellbar, dass sich rechts- und linkseitig der Schwenkachse 50 jeweils andere Hebelverhältnisse und demzufolge auch andere Übersetzungen bezogen auf Vertikalbewegungen der beiden Kolbenstangen 36, 46 ergeben.

Das Relaisventil 12 beinhaltet ein Doppelsitzventil mit einem einen aus Maßstabsgründen nicht gezeigten Druckluftvorrat mit wenigstens einem Bremszylinder verbindenden Einlassventil 56 und mit einem den wenigstens einen Bremszylinder mit einer Entlüftung verbindenden Auslassventil 58.

Die zweite Kolbenstange 46 betätigt einen Ventilschließkörper 60 des Auslassventils 58, welcher vorzugsweise durch das Ende der zweiten Kolbenstange 46 selbst gebildet wird. Der Ventilschließkörper 60 wirkt mit einem Ventilsitz 62 des Auslassventils 58 an einer durch eine Druckfeder 64 in Schließrichtung belasteten Hülse 66 zusammen. Diese Hülse 66 bildet zugleich den Ventilschließkörper des Einlassventils 56, welche durch die Wirkung der Druckfeder 64 gegen einen Ventilsitz 68 des Einlassventils 56 am Rand einer Stufe einer Stufenbohrung 70 im Gehäuse 32 dichtet.

Falls nun das Ende 60 der zweiten Kolbenstange 46 vom Ventilsitz 62 des Auslassventils 58 durch eine Bewegung nach unten abgehoben ist, kann Druckluft vom Bremszylinder zur Entlüftung strömt. Andererseits kann Druckluft von einem ebenfalls aus Maßstabsgründen nicht dargestellten Druckluftvorrat in den Bremszylinder nachströmen, wenn der Ventilschließkörper des Einlassventils 56 in Form der Hülse 66 von dem Ventilsitz 68 des Einlassventils 56 am Rand der Stufenbohrung 70 abgehoben ist.

Weiterhin ist die zweite Kolbenstange 46 mit einer dritten Kolbenmembran 72 axialfest verbunden, welche durch den Bremsdruck C in einer das Auslassventil 58 öffnenden Richtung belastet ist. Hierzu ist zwischen einer dem Auslassventil 58 zugewandten Wirkfläche der dritten, am Rand der Stufenbohrung 70 befestigten Kolbenmembran 72 und dem Gehäuse 32 eine dritte Druckkammer 74 ausgebildet, in welcher der Bremsdruck C ansteht.

Vor diesem Hintergrund ist die Funktionsweise des Einheitsdruckumsetzers 20 wie folgt :

Auf ein elektrisches Bremsdruckanforderungssignal der direkten elektropneumatischen Bremseinrichtung hin erzeugt der e/p-Druckregler 8 einen Vorsteuerdruck $C_{v\ direkt}$, welchen das im gleichen Gehäuse 30 untergebrachte Druckbegrenzungsventil 14 auf einen vorgebbaren maximalen Vorsteuerdruck $C_{v\ direkt\ max}$ begrenzt, der in der zweiten Druckkammer 44 ansteht. Gleichzeitig erzeugt das Steuerventil 2 der indirekten Druckluftbremse in Abhängigkeit des von der Bremsanforderung abhängigen Hauptluftleitungsdrucks $p_{HL}$ einen Vorsteuerdruck $C_{v\ indirekt}$, der in die erste Druckkammer 42 eingesteuert wird.

Dann ergibt sich an der ersten Kolbenstange 36 folgende Kräftebeziehung :

$$F_{\text{Kolbenstange}} = (C_{v\,\text{direkt max}} \cdot A - C_{v\,\text{indirekt}} \cdot A) + C_{v\,\text{indirekt}} \cdot A \qquad (1)$$

Der Klammerausdruck ($C_{v\,\text{direkt max}} \cdot A - C_{v\,\text{indirekt}} \cdot A$) beschreibt die Kraft auf die zweite Kolbenmembran 40 und der Ausdruck $C_{v\,\text{indirekt}} \cdot A$ die auf die erste Kolbenmembran 38 wirkende Kraft.

Falls nun der Vorsteuerdruck $C_{v\,\text{direkt max}}$ der direkten Bremseinrichtung kleiner ist als der Vorsteuerdruck $C_{v\,\text{indirekt}}$ der indirekten Druckluftbremse, so wird die zweite Kolbenmembran 40 aufgrund des dann negativen Klammerausdrucks ($C_{v\,\text{direkt max}} \cdot A - C_{v\,\text{indirekt}} \cdot A$) relativ zur ersten Kolbenstange 36 nach oben bewegt und kann folglich keine Kraft auf diese ausüben. Hingegen wird die an der ersten Kolbenmembran 38 wirkende, auf dem größeren Vorsteuerdruck $C_{v\,\text{indirekt}}$ basierende Kraft $C_{v\,\text{indirekt}} \cdot A$ auf die erste Kolbenstange 38 aufgrund der axialfesten Verbindung übertragen und sorgt für eine Abwärtsbewegung derselben. Diese Abwärtsbewegung wird durch den Kipphebel 48 in eine Aufwärtsbewegung der zweiten Kolbenstange 46 gewandelt, deren Ausmaß von der Lage der Schwenkachse 50 abhängt, welche wiederum durch den Lastdruck T beeinflusst wird. Generell gilt : Je größer der Lastdruck T ist, desto größer muss auch die Hebelübersetzung am Kipphebel 48 gewählt werden, um einen ausreichenden Bremsdruck C zu erzeugen. Die Aufwärtsbewegung der zweiten Kolbenstange 46 bewirkt, dass der Ventilschließkörper des Einlassventils 56 in Form der Hülse 66 vom Ventilsitz 68 des Einlassventils 56 abhebt und Druckluft vom Druckluftvorrat in den Bremszylinder zum Bremskraftaufbau strömen kann (Druck steigern).

Falls aber der Vorsteuerdruck $C_{v\,\text{direkt max}}$ der direkten Bremseinrichtung größer ist als der Vorsteuerdruck $C_{v\,\text{indirekt}}$ der indirekten Druckluftbremse, so wird heben sich in Gleichung (1) die beiden Ausdrücke $C_{v\,\text{indirekt}} \cdot A$ mit entgegengesetzten Vorzeichen gegeneinander auf, so dass auf die erste Kolbenstange 36 die aus dem größeren Vorsteuerdruck $C_{v\,\text{direkt max}}$ resultierende Kraft wirkt und sie nach unten bewegt wird, wobei diese Bewegung die oben bereits beschriebenen Konsequenzen für die Betätigung des Relaisventils 12 hat.

Falls lediglich der Vorsteuerdruck $C_{v\,\text{direkt max}}$ der direkten Bremseinrichtung wirkt und kein Vorsteuerdruck $C_{v\,\text{indirekt}}$ der indirekten Druckluftbremse vorhanden ist, so ist die erste Druckkammer 42 drucklos, wodurch auf die erste Kolbenmembran 38 keine Druckkraft wirkt. Die Betätigungskraft für das Relaisventil 12 erhält das Hebelgestänge 28 dann von der durch den Vorsteuerdruck $C_{v\,\text{direkt max}}$ der direkten Bremseinrichtung beaufschlagten zweiten Kolbenmembran 40.

Bei lediglich vorhandenem Vorsteuerdruck $C_{v\,\text{indirekt}}$ der indirekten Druckluftbremse und ausgefallenem Vorsteuerdruck $C_{v\,\text{direkt max}}$ der direkten Bremseinrichtung wird die zweite Kolbenmembran 40 infolge der druckbeaufschlagten ersten Druckkammer 42 nach oben bewegt, ohne dass diese eine Druckkraft auf die erste Kolbenstange 36 ausübt. Diese wird dann von der ersten, durch den Vorsteuerdruck $C_{v\,\text{indirekt}}$ der indirekten Druckluftbremse belasteten Kolbenmembran 38 erzeugt.

Zum Drucksenken des Bremsdrucks C werden der Vorsteuerdruck $C_{v\,\text{indirekt}}$ der indirekten Druckluftbremse und der Vorsteuerdruck $C_{v\,\text{direkt max}}$ der direkten Bremseinrichtung gesenkt, wobei wiederum eine dem größeren der beiden Vorsteuerdrücke entsprechende Kraft auf die erste Kolbenstange 36 übertragen wird. Folglich sinkt diese nach unten gerichtete Kraft auf die erste Kolbenstange 36, gegen welche die aus dem nach wie vor hohen Bremsdruck C an der dritten Kolbenmembran 72 der zweiten Kolbenstange 46 resultierende größere Kraft über den Kipphebel 48 wirkt, so dass sich infolgedessen die zweite Kolbenstange 46 nach unten bewegt und der Ventilschließkörper 60 des Auslassventils 58 vom zugeordneten Ventilsitz 62 abhebt, um den Bremszylinder zu entlüften (Druck senken).

Zwischen den Stellungen des Relaisventils 12 zum Drucksteigern und zum Drucksenken existiert eine Abschlussstellung, in welcher der Bremsdruck C und der jeweils wirksame Vorsteuerdruck so gegeneinander ausgewogen sind, dass sowohl das Einlassventil 56 als auch das Auslassventil 58 geschlossen ist, so dass der Bremsdruck C gehalten wird (Druck halten).

Bezugszeichenliste

1    Bremssystem

2    Steuerventil

4    Steuerventil

6    Steuerventil

8    e/p-Druckregler

| | |
|---|---|
| 12 | Relaisventil |
| 14 | Druckbegrenzungsventil |
| 16 | Gleitschutzventil |
| 18 | Gleitschutzventil |
| 20 | Einheitsdruckumsetzer |
| 24 | Auswahleinrichtung |
| 26 | Stelleinrichtung |
| 28 | Getriebe |
| 30 | Gehäuse |
| 32 | Gehäuse |
| 34 | Gehäuse |
| 36 | erste Kolbenstange |
| 38 | erste Kolbenmembran |
| 40 | zweite Kolbenmembran |
| 42 | erste Druckkammer |
| 44 | zweite Druckkammer |
| 46 | zweite Kolbenstange |
| 48 | Kipphebel |
| 50 | Schwenkachse |
| 52 | Druckfeder |
| 54 | Kolben |
| 56 | Einlassventil |
| 58 | Auslassventil |
| 60 | Ventilschließkörper |
| 62 | Ventilsitz |
| 64 | Druckfeder |
| 66 | Ventilschließkörper |
| 68 | Ventilsitz |
| 70 | Stufenbohrung |

72    dritte Kolbenmembran

74    dritte Druckkammer

**Patentansprüche**

1. Elektropneumatisches Bremssystem eines Schienenfahrzeugs, beinhaltend eine direkt wirkende elektro-pneumatische Bremseinrichtung und eine indirekt wirkende Druckluftbremseinrichtung, mit wenigstens folgenden Bauelementen oder Baugruppen:

   a) einen Druckregler (8), welcher in Abhängigkeit eines elektrischen Bremsdruckanforderungssignals der direkten Bremsen einen Vorsteuerdruck ($C_{v\,direkt}$) der direkten Bremse erzeugt,
   b) ein Druckbegrenzungsventil (14), welches den Vorsteuerdruck ($C_{v\,direkt}$) der direkten Bremse auf einen vorgebbaren maximalen Vorsteuerdruck ($C_{v\,direkt\,max}$) der direkten Bremse begrenzt,
   c) ein Steuerventil (2), welches in Abhängigkeit eines Hauptluftleitungsdrucks ($p_{HL}$) der indirekten Bremse einen Vorsteuerdruck ($C_{v\,indirekt}$) der indirekten Bremse erzeugt,
   **gekennzeichnet durch**:
   d) eine Auswahleinrichtung (24), welche von dem maximalen Vorsteuerdruck der direkten Bremse ($C_{v\,direkt\,max}$) und dem Vorsteuerdruck ($C_{v\,indirekt}$) der indirekten Bremse eine dem jeweils größeren Vorsteuerdruck ($C_{v\,direkt\,max}$ oder $C_{v\,indirekt}$) entsprechende Kraft auf ein abhängig von dem jeweiligen Lastzustand des Schienenfahrzeugs mittels einer Stelleinrichtung (26) übersetzungsveränderbares Getriebe (28) überträgt, welches ein Relaisventil (12) betätigt, das einen der Betätigung **durch** das Getriebe (28) entsprechenden Bremsdruck (C) aussteuert.

2. Bremssystem nach Anspruch 1, **dadurch gekennzeichnet, dass** wenigstens die Auswahleinrichtung (24), das Getriebe (28) und das Relaisventil (12) miteinander verblockt oder in einem gemeinsamen Gehäuse untergebracht sind.

3. Bremssystem nach Anspruch 1, **dadurch gekennzeichnet, dass** wenigstens die Auswahleinrichtung (24), das Getriebe (28), das Relaisventil (12), der Druckregler (8), die Stelleinrichtung (26) und das Druckbegrenzungsventil (14) miteinander verblockt sind.

4. Bremssystem nach Anspruch 2 oder 3, **dadurch gekennzeichnet, dass** der Druckregler (8) und das Druckbegrenzungsventil (14), das Relaisventil (12), die Auswahleinrichtung (24) und das Getriebe (28) sowie die Stelleinrichtung (26) jeweils in eigenen, miteinander verblockten Gehäusen (30, 32, 34) untergebracht sind.

5. Bremssystem nach wenigstens einem der vorhergehenden Ansprüche, **dadurch gekennzeichnet, dass** die Auswahleinrichtung (24) durch eine Kolben- und/oder Membrananordnung gebildet wird, mit einer ersten, mit einer ersten Kolbenstange (36) axialfest verbundenen Wirkfläche (38) und einer zweiten, auf die erste Kolbenstange (36) lediglich in einer Richtung kraftübertragenden Wirkfläche (40), wobei zwischen der ersten Wirkfläche (38) und der zweiten Wirkfläche (40) eine unter dem Vorsteuerdruck ($C_{v\,indirekt}$) der indirekten Bremse stehende erste Druckkammer (42) und zwischen der zweiten Wirkfläche (40) und einer Gehäusewand (30) eine unter dem maximalen Vorsteuerdruck ($C_{v\,direkt\,max}$) der direkten Bremse stehende zweite Druckkammer (44) ausgebildet ist.

6. Bremssystem nach Anspruch 5, **dadurch gekennzeichnet, dass** das die erste Wirkfläche und die zweite Wirkfläche durch Kolbenmembranen (38, 40) gebildet werden.

7. Bremssystem nach Anspruch 5 oder 6, **dadurch gekennzeichnet, dass** das Getriebe ein Hebelgestänge (28) beinhaltet, mit der ersten Kolbenstange (36), einer zweite, das Relaisventil (12) betätigenden Kolbenstange (46) sowie mit einem Kipphebel (48), wobei die erste Kolbenstange (36) an einem Ende des Kipphebels (48) und die zweite Kolbenstange (46) an dessen anderem Ende angelenkt und die Lage einer zwischen den Anlenkpunkten angeordneten Abstützung (50) des Kipphebels (48) abhängig von dem jeweiligen Lastzustand des Schienenfahrzeugs durch die Stelleinrichtung (26) einstellbar ist.

8. Bremssystem nach Anspruch 7, **dadurch gekennzeichnet, dass** die Abstützung des Kipphebels (48) mittels eines durch einen Lastdruck belasteten Kolben (54) der Stelleinrichtung (26) verstellbar ist.

9. Bremssystem nach Anspruch 8, **dadurch gekennzeichnet, dass** das Relaisventil ein Doppelsitzventil (12) mit einem einen Druckluftvorrat mit wenigstens einem Bremszylinder verbindenden Einlassventil (56) und mit einem den wenigstens einen Bremszylinder mit einer Entlüftung verbindenden Auslassventil (58) ist.

10. Bremssystem nach Anspruch 9, **dadurch gekennzeichnet, dass** die zweite Kolbenstange (46) einen Ventilschließkörper (60) des Auslassventils (58) betätigt und mit einem Kolben oder einer Kolbenmembran (72) axialfest verbunden ist, welche durch den Bremsdruck (C) in einer das Auslassventil (58) öffnenden Richtung belastet ist.

11. Bremssystem nach Anspruch 10, **dadurch gekennzeichnet, dass** der Ventilschließkörper (60) an dem vom Kipphebel (48) abgewandten Ende der zweiten Kolbenstange (46) ausgebildet ist.

12. Bremssystem nach Anspruch 11, **dadurch gekennzeichnet, dass** die zweite Wirkfläche (40) auf die erste Kolbenstange (36) lediglich in einer das Einlassventil (56) öffnenden Richtung kräfteübertragend ist.

## Claims

1. Electro-pneumatic brake system of a rail vehicle, including a directly operating electro-pneumatic brake device and an indirectly operating compressed-air brake device, comprising at least the following components or modules:

   (a) a pressure regulator (8) that generates a pilot pressure ($C_{v\ direkt}$) of said direct brake as a function of an electrical brake pressure demand signal of said direct brake,
   (b) a pressure-limiting valve (14) which limits said pilot pressure ($C_{v\ direkt}$) of said direct brake to a predeterminable maximum pilot pressure level ($C_{v\ direkt\ max}$) of said direct brake,
   (c) a control valve (2) which generates a pilot pressure ($C_{v\ indirekt}$) of said indirect brake as a function of a brake pipe pressure ($p_{HL}$) of said indirect brake,
   **characterised by:**
   (d) a selector means (24) which transmits a force corresponding to the respective higher pilot pressure ($C_{v\ direkt\ max}$ or $C_{v\ indirekt}$) from said maximum pilot pressure of said direct brake ($C_{v\ direkt\ max}$) and said pilot pressure ($C_{v\ indirekt}$) of said indirect brake to a transmission (28) whose gear ratio is variable by means of an adjusting means (26) as a function of the respective load condition of the rail vehicle, which transmission operates a relay valve (12) controlling a brake pressure (C) corresponding to the operation by said transmission (28).

2. Brake system according to Claim 1, **characterised in that** at least said selector means (24), said transmission (28) and said relay valve (12) are adapted to be combined with each other in one block or are accommodated in a common housing.

3. Brake system according to Claim 1, **characterised in that** at least said selector means (24), said transmission (28), said relay valve (12), said pressure regulator (8), said adjusting means (26) and said pressure-limiting valve are combined in one block.

4. Brake system according to Claim 2 or 3, **characterised in that** said pressure regulator (8) and said pressure-limiting valve (14), said relay valve (12), said selector means (24) and said transmission (28) as well as said adjusting means (26) are each accommodated in separate housings (30, 32, 34) combined with each other in one block.

5. Brake system according to at least one of the preceding Claims, **characterised in that** said selector means (24) is constituted by a piston and/or diaphragm system provided with a first operative area (38) connected to a first piston rod (36) so as to be fixed in the axial direction and with a second operative area (40) transmitting force on said first piston rod (36) merely in one direction, with a pressure chamber (42), which is subjected to said pilot pressure ($C_{v\ indirekt}$) of said indirect brake, being formed between said first operative area (38) and said second operative area (40) and with a second pressure chamber (44), which is subjected to said maximum pilot pressure ($C_{v\ direkt\ max}$) of said direct brake, being formed between said second operative area (40) and a housing wall (30).

6. Brake system according to Claim 5, **characterised in that** said first operative area and said second operative area are formed by piston diaphragms (38, 40).

7. Brake system according to Claim 5 or 6, **characterised in that** said transmission includes a lever linkage (28) comprising said first piston rod (36), a second piston rod (46) operating said relay valve (12) as well as a rocker arm (48), with said first piston rod (36) being articulated to one end of said rocker arm (48) and with said second piston rod (46) being articulated to the other end of the rocker arm, wherein the position of a support (50) of said rocker arm (48), which is disposed between the articulating points, is adjustable by means of said adjusting means (26) as a function of the respective load condition of the rail vehicle.

8. Brake system according to Claim 7, **characterised in that** said support of said rocker arm (48) is adjustable by means of a piston (54) of said adjusting means (26), which is loaded by a load pressure.

9. Brake system according to Claim 8, **characterised in that** said relay valve is a twin-seated valve (12) with an inlet valve (56) connecting a pressure reservoir to at least one brake cylinder and with a discharge valve (58) connecting said at least one brake cylinder to a venting means.

10. Brake system according to Claim 9, **characterised in that** said second piston rod (46) operates a valve-closing body (60) of said discharge valve (58) and is connected to a piston or a piston diaphragm (72) so as to be fixed in the axial direction, which diaphragm is subjected to the brake pressure (C) in a direction in which said discharge valve (58) is opened.

11. Brake system according to Claim 10, **characterised in that** said valve-closing body (60) is formed on that end of said second piston rod (46), which is turned away from said rocker arm (48).

12. Brake system according to Claim 11, **characterised in that** said second operative area (40) operates with transmission of forces to said first piston rod (36) merely in a direction in which said inlet valve (56) is opened.

## Revendications

1. Système de freinage électropneumatique d'un véhicule sur rails, renfermant un dispositif de freinage électropneumatique à action directe et un dispositif de freinage à pression d'air à action directe, comprenant au moins les composants ou modules suivants:

   (a) un régulateur de pression (8), qui engendre une pression pilote ($C_{v\,direkt}$) dudit frein direct en fonction d'un signal électrique de demande de pression de freinage dudit frein direct,
   (b) une soupape de limitation de pression (14), qui limite ladite pression pilote ($C_{v\,direkt}$) dudit frein direct à un niveau prédéterminable de pression pilote maximal ($C_{v\,direkt\,max}$) dudit frein direct,
   (c) une vanne pilote (2), qui engendre une pression pilote ($C_{v\,indirekt}$) dudit frein indirect en fonction d'une pression dans la conduite générale de frein ($p_{HL}$) dudit frein indirect,
   **caractérisé par:**
   (d) un moyen sélecteur (24), qui transfère un effet correspondant à la pression pilote ($C_{v\,direkt\,max}$ or $C_{v\,indirekt}$) plus haute respective à partir de ladite pression pilote maximale dudit frein direct ($C_{v\,direkt\,max}$) et ladite pression pilote ($C_{v\,indirekt}$) dudit frein indirect à un engrenage (28) dont le rapport des changements de vitesse est variable moyennant un moyen actionneur (26) en fonction de l'état de charge respectif du véhicule sur rails, cet engrenage opérant une soupape en relais (12) commandant une pression de freinage (C), qui correspond à l'opération par ledit engrenage (28).

2. Système de freinage selon la revendication 1, **caractérisé en ce qu'**au moins ledit moyen sélecteur (24), ledit engrenage (28) et ladite soupape en relais (12) sont aptes à être combinés l'un avec l'autre en un seul bloc ou sont reçus dans un carter commun.

3. Système de freinage selon la revendication 1, **caractérisé en ce qu'**au moins ledit moyen sélecteur (24), ledit engrenage (28), ladite soupape en relais (12), ledit, régulateur de pression (8), ledit moyen actionneur (26) et ladite soupape de limitation de pression sont combinés en un seul bloc.

4. Système de freinage selon la revendication 2 ou 3, **caractérisé en ce que** ledit régulateur de pression (8) et ladite soupape de limitation de pression (14), ladite soupape en relais (12), ledit moyen sélecteur (24) et ledit engrenage (28) ainsi que ledit moyen actionneur (26) sont reçus, chacun, dans des carters séparés (30, 32, 34) combinés l'un avec l'autre en un seul bloc.

**5.** Système de freinage selon au moins un des revendications précédentes, **caractérisé en ce que** ledit moyen sélecteur (24) est constitué par un système à piston et/ou à membrane, pourvu d'une première aire active (38) reliée à une première tige de piston (36) de manière d'être fixe en sens axial, et à une deuxième aire active (40) transférant de l'effet à ladite première tige de piston (36) en une seule direction, à une chambre de pression (42), qui est assujettie à ladite pression pilote ($C_{v\,indirekt}$) dudit frein indirect, étant formée entre ladite première aire active (38) et ladite deuxième aire active (40), et à une deuxième chambre de pression (44), qui est assujettie à ladite pression pilote maximale ($C_{v\,direkt\,max}$) dudit frein direct, étant formée entre ladite deuxième aire active (40) et une paroi de carter (30).

**6.** Système de freinage selon la revendication 5, **caractérisé en ce que** ladite première aire active et ladite deuxième aire active sont formées par des membranes de piston (38, 40).

**7.** Système de freinage selon la revendication 5 ou 6, **caractérisé en ce que** ledit engrenage renferme une tringlerie aux leviers (28) comprenant ladite première tige de piston (36), une deuxième tige de piston (46) opérant ladite soupape en relais (12) ainsi qu'un culbuteur (48), à ladite première tige de piston (36) étant articulée à une extrémité dudit culbuteur (48) et à ladite deuxième tige de piston (46) étant articulée à l'autre extrémité du culbuteur, dans lequel la position d'un appui (50) dudit culbuteur (48), qui est disposé entre les points d'articulation, est ajustable moyennant ledit moyen actionneur (26) en fonction de l'état de charge respectif du véhicule sur rails.

**8.** Système de freinage selon la revendication 7, **caractérisé en ce que** ledit appui dudit culbuteur (48) est ajustable moyennant un piston (54) dudit moyen actionneur (26), qui est chargé par une pression de charge.

**9.** Système de freinage selon la revendication 8, **caractérisé en ce que** ladite soupape en relais est une soupape á double siège (12) à une valve d'entrée (56), qui relie un réservoir de pression à au moins un cylindre de frein et à une valve de décharge (58), qui relie ledit au moins un cylindre de frein à un moyen de dégagement.

**10.** Système de freinage selon la revendication 9, **caractérisé en ce que** ladite deuxième tige de piston (46) commande un corps de fermeture de valve (60) de ladite valve de décharge (58) et est relié à un piston ou à une membrane de piston (72) d'une manière, qu'il soit fixe en sens axial, à ladite membrane étant assujettie à la pression de freinage (C) en une direction, en laquelle ladite valve de décharge (58) s'ouvre.

**11.** Système de freinage selon la revendication 10, **caractérisé en ce que** ledit corps de fermeture de valve (60) est formé à cette extrémité de ladite deuxième tige de piston (46), qui est opposé audit culbuteur (48).

**12.** Système de freinage selon la revendication 11, **caractérisé en ce que** ladite deuxième aire active (40) est opérative en transfert des effets à ladite première tige de piston (36) seulement en une direction, en laquelle ladite valve d'entrée (56) s'ouvre.

— beladen
— teilw. b.
  leer

Bremsanforderung
direkte Bremse [%]

FIG.1

— beladen
— teilw. b.
  leer

Bremsanforderung
direkte Bremse [%]

FIG.2

FIG. 3

EP 1 747 132 B1

Gateway-Einheit
**GU**

Gateway-Einheit
**GU**

| Bremssteuergerät **CU** | Bremssteuergerät **CU** | Bremssteuergerät **CU** | Bremssteuergerät **CU** | Bremssteuergerät **CU** |
|---|---|---|---|---|
| Pneumatische Steuereinheit **PU** | Pneumatische Steuereinheit **PU** | Pneumatische Steuereinheit **PU** | Pneumatische Steuereinheit **PU** | Pneumatische Steuereinheit **PU** |

**CCM-G**
Kompaktsteuermodul
- Gateway -

**CCM**
Kompaktsteuermodul

FIG.4

FIG.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6669 A
- US 308 B1

- DE 3803639 A1